# EUROPÄISCHE PATENTSCHRIFT

(11) **EP 2 547 414 B1**
(45) Veröffentlichungstag und Bekanntmachung des Hinweises auf die Patenterteilung: **18.03.2020**
(21) Anmeldenummer: 11701024.9
(22) Anmeldetag: 25.01.2011
(51) Int. Cl.: B01D 29/11, B01D 29/21, B01D 46/24, B01D 46/00

(54) **VERFAHREN ZUM HERSTELLEN EINES FILTERELEMENTES**
METHOD FOR PRODUCING A FILTER ELEMENT
PROCÉDÉ DE FABRICATION D'UN ÉLÉMENT FILTRANT

(30) Priorität: 17.03.2010 DE 102010011722
(43) Veröffentlichungstag der Anmeldung: 23.01.2013
(73) Patentinhaber: Hydac Filtertechnik GmbH, 66280 Sulzbach/Saar (DE)
(72) Erfinder: MEES, Harald, 66822 Lebach (DE)
(74) Vertreter: Bartels und Partner, Patentanwälte
(86) Internationale Anmeldenummer: PCT/EP2011/000283
(87) Internationale Veröffentlichungsnummer: WO 2011/113505

(56) Entgegenhaltungen:
- EP-B1- 1 015 095
- US-A- 3 306 794
- US-A- 3 397 793
- US-A- 5 814 219

## Beschreibung

Die Erfindung betrifft ein Verfahren zum Herstellen eines Filterelementes zur Filtration von Fluiden, wie Hydraulikflüssigkeiten, Schmier- oder Kraftstoffen, mit den Schritten: Vorsehen zumindest eines Abschnitts einer Filtermattenbahn auf einer oder mehreren Lagen zumindest eines Filtermediums; Verbinden der Enden des zumindest einen Abschnitts zur Bildung eines Ringkörpers und Aufbringen desselben auf ein Stützrohr; Umschlingen der Außenseite des auf dem Stützrohr befindlichen Ringkörpers mit zumindest einem Zuschnitt einer Folienbahn und Aufeinanderlegen von Endbereichen des zumindest einen Zuschnitts der Folienbahn und Verbinden der sich überlappenden Endbereiche.

Filterelemente, wie sie in technischen Anlagen eingesetzt werden, um betrieblich benutzte Fluide von Verschmutzungen zu befreien, sind in einer Vielzahl von Ausführungsformen bekannt. Das Dokument EP 1 015 095 B1 zeigt eine vorteilhafte Bauform, die in entsprechenden Systemen weit verbreitete Anwendung gefunden hat. Wenn im Betrieb die Filtermatte vollständig verschmutzt ist, muss das Filterelement gegen ein neues, unverbrauchtes Filterelement ausgetauscht werden. Angesichts der großen Verbreitung derartiger Filterelemente ergeben sich hohe Stückzahlen für Erstausrüstungs- und Austauschbedarf, so dass derartige Filterelemente sozusagen als "Massenartikel" bezeichnet werden können. Dementsprechend ist eine einfache und rationelle Fertigung der Filterelemente wirtschaftlich von großer Bedeutung.

Entsprechend dem im Dokument EP 1 015 095 B1 aufgezeigten Stand der Technik wird bei der Herstellung des mit einer Außenhülse aus einer perforierten Folienbahn versehenen Filterelementes so vorgegangen, dass aus der die Außenhülse bildenden Folienbahn ein geschlossener Zylinder gebildet wird, wobei überlappende Enden der Folienbahn durch eine Längsnaht verbunden werden und wonach der Ringkörper in die zylindrische Außenhülse eingeführt wird. Um das Einführen zu erleichtern, werden die Falten am stirnseitigen Ende des Ringkörpers derart zusammengefasst, dass ein Einführkonus entsteht, der das Einführen in die zylindrische Außenhülse erleichtert.

Die EP 1 015 095 B1 beschreibt ein Filterelement mit einem fluiddurchlässigen Stützrohr, das von einer Filtermatte umgeben ist, die wiederum von einem, einen Filterraum begrenzenden Filtermantel mit Durchlässen umschlossen ist und mit zwei stirnseitig angeordneten Endkappen, wobei der Filtermantel aus einem Kunststoffmantel besteht, der aus einem ebenen Zuschnitt gebildet ist, dessen beide aufeinander zu gebogenen Enden unter Bildung des Filterraumes über eine durch ein Heißklebe-, Heizelement- oder Ultraschall-Schweißverfahren hergestellte Verbindungsnaht fest miteinander verbunden sind.

Die US 3 306 794 und die US 3 397 793 zeigen jeweils weitere Verfahren zum Herstellen eines Filterelements auf.

Im Hinblick hierauf liegt der Erfindung die Aufgabe zugrunde, ein Verfahren anzugeben, das die Herstellung derartiger Filterelemente auf besonders rationelle und kostengünstige Weise ermöglicht.

Erfindungsgemäß ist diese Aufgabe durch ein Verfahren gelöst, das die im Patentanspruch 1 angegebenen Verfahrensschritte a) bis f) umfasst.

Demgemäß wird so vorgegangen, dass auf einen auf einem inneren Stützrohr befindlichen, vormontierten Ringkörper aus einer gefalteten Filtermattenbahn eine Außenhülse des Filterelementes dadurch gebildet wird, dass zumindest ein zunächst ebener Zuschnitt einer Folienbahn um den Ringkörper gelegt wird, wonach sich überlappende Endbereiche miteinander verbunden werden.

Das erfindungsgemäße Vorgehen, bei dem die Folienbahn um die Außenseite des Ringkörpers herum gelegt und erst dann die verbindende Längsnaht gebildet werden, stellt gegenüber dem Stand der Technik eine Vereinfachung dar, die zu einer Verringerung der Fertigungskosten führt. Die Endbereiche der Folienbahn bzw. des zumindest einen Zuschnitts der Folienbahn werden typischerweise durch Ausbildung einer Längsnaht miteinander verbunden. Je nach herzustellendem Filterelement kann das Stützrohr Fluiddurchlässe aufweisen und/oder die Folienbahn perforiert ausgebildet sein.

Es wird hierbei weiterhin so vorgegangen, dass der zumindest eine Zuschnitt der Folienbahn vor dem Verbinden seiner Endbereiche um den Ringkörper gespannt wird, indem obere Formkörper eine zusätzliche Bewegung in der Umfangsrichtung ausführen. Somit wird die Vorspannung der Filtermatte nicht mehr von der Toleranzlage (Faltenhöhe) der Filtermatte abhängig, wodurch sich eine weitere Vereinfachung der Herstellung ergibt. Da trotz der im Fertigzustand erreichten Vorspannung wegen des Wegfalls einer axialen Einführbewegung keine Reibung zwischen Außenhülse und Filtermatte erfolgt, entsteht kein Abrieb. Auch ist für das Erzielen einer gewünschten Vorspannung der Außenhülse keinerlei Nachbehandlung, etwa in Form von Aufschrumpfen der Folie erforderlich, so dass keine thermische Beeinträchtigung der Filtermattenbahn stattfindet.

Vorteilhafte Ausgestaltungen des erfindungsgemäßen Verfahrens sind Gegenstände von Unteransprüchen.

Vorzugsweise wird das Verbinden der sich überlappenden Endbereiche durch ein thermisches Fügeverfahren durchgeführt. Bei einer die Außenhülse bildenden Folie aus einer Polyamid- oder Polyethylenverbindung, einer Folie aus Polyester oder Epoxyd-Polyurethan oder einem ähnlichen Kunststoff mit guten Heißklebeeigenschaften, kann die Verbindung durch ein Ultraschweißverfahren oder mittels eines Schweißlasers durchgeführt werden.

Im letzteren Falle kann, wenn der Werkstoff der Folie selbst keine geeignete Lasersperrschicht bildet, das Laserschweißen unter Benutzung einer zusätzlichen Lasersperrschicht durchgeführt werden.

Bei entsprechenden Materialien kann das Verschweißen ohne einen Schweißzusatzstoff durchgeführt werden, während alternativ vor dem Verschweißen ein Schweißzusatzstoff zwischen die sich überlappende Endbereiche eingelegt wird.

Mit besonderem Vorteil kann hierbei als Schweißzusatzstoff eine als Lasersperrschicht dienende Folie benutzt werden.

Hinsichtlich des Umschlingens des Ringkörpers mit der Folie kann so vorgegangen werden, dass bewegliche Formkörper benutzt werden, die mittels Zustellbewegungen an der zunächst flachen Folienbahn angreifen und die Folienbahn um den Ringkörper herum formen, wobei die Zustellbewegungen mit in Umfangsrichtung verlaufenden Komponenten bewegt werden können, so dass die Folienbahn beim Umschlingen des Ringkörpers gespannt wird.

Nachstehend ist die Erfindung anhand der Zeichnung im Einzelnen erläutert. Es zeigen:
- Fig. 1: eine perspektivische Ansicht auf ein nach dem erfindungsgemäßen Verfahren hergestelltes Filterelement;
- Fig. 2: eine perspektivische Schrägansicht mit Blick auf den Endabschnitt des ohne zugehörige Endkappen dargestellten Filterele-mentes von Fig. 1;
- Fig. 3: einen stark vergrößert dargestellten Ausschnitt des in Fig. 2 mit III bezeichneten Bereiches;
- Fig. 4: eine stark schematisch vereinfachte, perspektivische Darstellung einer Verfahrenseinrichtung mit in einer Ausgangsstellung befindlichen Formkörpern; und
- Fig. 5: eine Vorderansicht der Einrichtung von Fig. 4 mit im Betriebszustand in geschlossener Arbeitsstellung befindlichen Formkörpern.

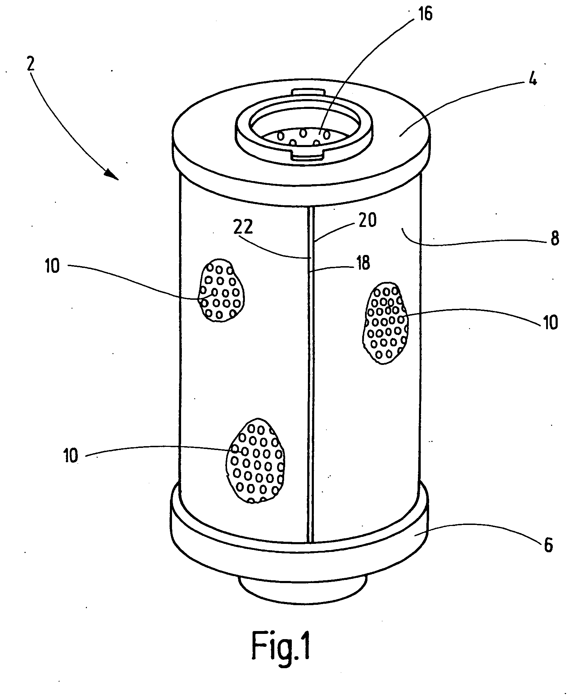

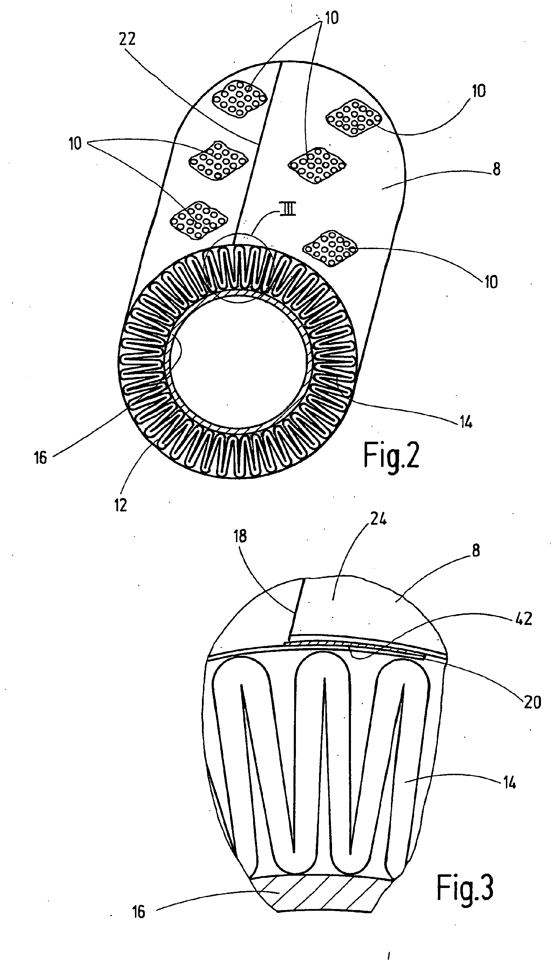

Das in Fig. 1 zur Gänze dargestellte Filterelement 2 weist zwischen Endkappen 4 und 6, die aus Kunststoff pressgeformt sind, eine aus einer perforierten Folienbahn 8 gebildete Außenhülse auf. Die Perforation der Folienbahn 8 ist lediglich in einigen Bezirken, die mit 10 bezeichnet sind, angedeutet. Die Folienbahn 8 umgibt einen Ringkörper 12 dessen Aufbau am deutlichsten aus Fig. 2 und 3 erkennbar ist. Wie ersichtlich, weist der Ringkörper 12 eine gefaltete Filtermattenbahn 14 auf, die plisseeartig gefaltet ist und ein inneres, Fluiddurchlässe aufweisendes Stützrohr 16 umgibt. Wie Fig. 3 zeigt, sind die Enden 18 und 20 der Folienbahn 8 so übereinander gelegt, dass ein Überlappungsbereich 24 gebildet ist, in dem die gebildete Außenhülle in einer Längsnaht 22 (siehe Fig. 1 und 2) geschlossen ist.

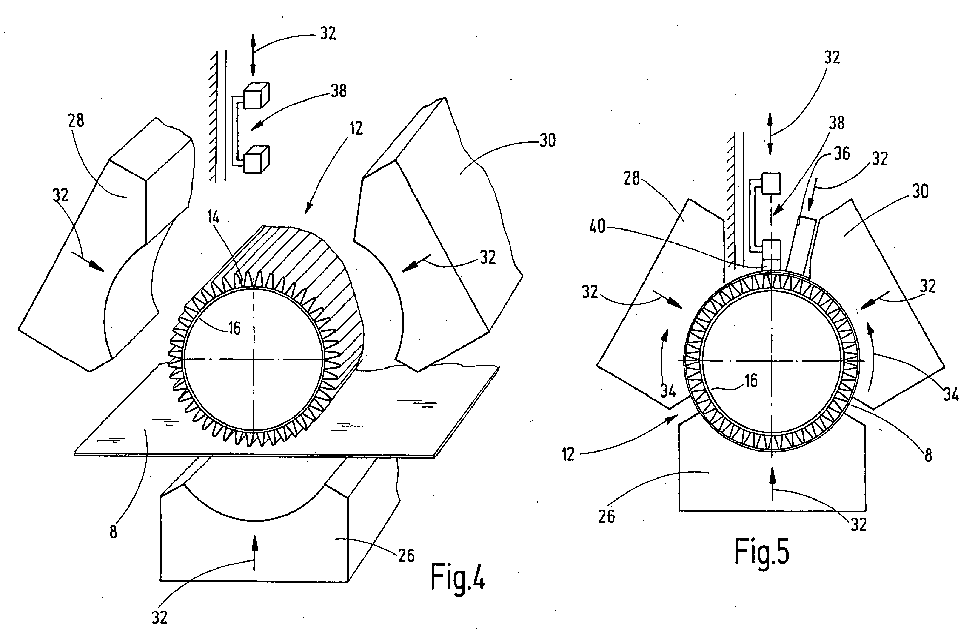

Fig. 4 und 5 verdeutlichen in stark schematisch vereinfachter Darstellung eine Verfahrenseinrichtung zur Durchführung des erfindungsgemäßem Verfahrens. Wie aus Fig. 4 erkennbar ist, befindet sich die Folienbahn 8 zunächst in Form eines flachen Zuschnittes unterhalb des vormontierten Ringkörpers 12, bestehend aus der das Stützrohr 16 umgebenden Filtermatte 14. Die Einrichtung weist einen bewegbaren, unteren Formkörper 26 sowie bewegbare obere Formkörper 28 und 30 auf. Zunächst wird durch nicht dargestellte Zuführfinger die Folienbahn 8 in Fig. 4 nach oben bewegt und an die Außenseite des Ringkörpers 12 angelegt. Sodann wird der untere Formkörper 26 in Richtung des Bewegungspfeiles 32 nach oben bewegt, während die oberen Formkörper 28 und 30, ebenfalls in Richtung der ihnen zugeordneten Bewegungspfeile 32, in Richtung auf das Zentrum des Ringkörpers 12 bewegt werden, wodurch die Einrichtung den geschlossenen Zustand erreicht, der in Fig. 5 dargestellt ist. In diesem Zustand sind die Enden 18 und 20 der Folienbahn 8, wie in Fig. 3 gezeigt, so übereinander gelegt, dass der Überlappungsbereich 24 gebildet ist, an dem ein Schweißvorgang zur Bildung der Längsnaht 22 durchgeführt wird. Bevor dies stattfindet, also bevor die gebildete Außenhülle geschlossen wird, wird dieser eine Vorspannung erteilt, indem in der Folienbahn 8 in Umfangsrichtung eine Zugspannung erzeugt wird. Dies kann auf beliebige geeignete Weise erfolgen, beispielsweise indem an den Enden 18 und 20 der Folienbahn vor dem Übereinanderlegen ein Zugmittel (nicht dargestellt) angreift oder indem die oberen Formkörper 28 und 30, wenn sie in der in Fig. 5 gezeigten, geschlossenen Stellung an der Außenseite der Folienbahn anliegen, eine zusätzliche Bewegung in Richtung der Bogenpfeile 34 ausführen, durch die die Folienbahn 8 gespannt wird.

Vor dem eigentlichen Schweißvorgang werden die Enden 18 und 20 der Folienbahn 8 vorzugsweise mittels eines oder mehrerer Andrückstücke 36 aneinander gehalten. Bei dem vorliegend beschriebenen Beispiel erfolgt die Verbindung durch Laserschweißen mittels einer entsprechend dem Bewegungspfeil 32 bewegbaren Lasereinheit 38. Wie aus der Darstellung von Fig. 5 ersichtlich ist, weist die Lasereinheit 38 an dem gegen den Überlappungsbereich 24 heran bewegbaren vorderen Ende einen Andrückkörper 40 aus für Laserlicht durchlässigem Plexiglas auf, der während des Schweißvorganges den Schweißbereich zusammendrückt.

Bei einer Folienbahn 8 aus einem für Laserlicht undurchlässigen Kunststoff, wobei die Folienbahn 8 selbst eine für Laserschweißen geeignete Lasersperrschicht bildet, kann der Schweißvorgang bei einem für eine Heißsiegelung geeigneten Kunststoff ohne Schweißzusatzstoff durchgeführt werden. Ohne einen Schweißzusatzstoff kann die Verbindung, anstelle durch Laserschweißen, auch durch Ultraschallschweißen durchgeführt werden. Jedoch kann auch bei Ultraschallschweißen, wie bei Laserschweißen, ein Schweißzusatzstoff verwendet werden, um ein Heißklebeverfahren (Hotmelt) durchzuführen. Für das Laserschweißen kann ein derartiger Schweißzusatzstoff, wie er in Fig. 3 mit 42 bezeichnet ist, in Form eines Folienstreifens im Überlappungsbereich 24 zwischen die Enden 18, 20 der Folienbahn 8 eingelegt werden. Dabei kann es sich um eine Folie aus Polybuthylenterephtalat handeln. Eine derartige PBT-Folie, wie sie unter der Bezeichnung "Vestodur®" vertrieben wird, kann bei dem thermischen Schweißvorgang eine Art Schmelzklebstoff bilden. Außerdem kann ein derartiger Zusatzstoff als für Laserlicht undurchlässige Lasersperrschicht dienen, wenn der Schweißvorgang mittels Laserschweißen durchgeführt wird.

Das anspruchsgemäße Verfahren sieht den Einsatz von Abschnitten einer Filtermattenbahn 14 aus einer oder mehreren Lagen plisseeartig gefalteter Filtermedien vor, wobei die eine Lage auch aus einem Multilayer bestehen kann, bei dem die aufeinandergelegten Lagen miteinander laminiert einen festen Verbund miteinander ausbilden.

Die in Rede stehende Sperrschicht kann auch durch Aufdampfen von Metall (Spattern) auf die Folie erzeugt werden oder partiell auf dieser aufgedruckt werden.

## Patentansprüche

1. Verfahren zum Herstellen eines Filterelementes (2) zur Filtration von Fluiden, wie Hydraulikflüssigkeiten, Schmier- oder Kraftstoffen, mit den Schritten:
a) Vorsehen zumindest eines Abschnittes einer Filtermattenbahn (14) aus einer oder mehreren Lagen zumindest eines Filtermediums;
b) Verbinden der Enden des zumindest einen Abschnittes zur Bildung eines Ringkörpers (12) und Aufbringen desselben auf ein Stützrohr (16);
c) Umschlingen der Außenseite des auf dem Stützrohr (16) befindlichen Ringkörpers (12) mit zumindest einem Zuschnitt einer Folienbahn (8);
d) Bereitstellen einer Einrichtung mit einem bewegbaren unteren Formkörper (26) und mit beweglichen oberen Formköpern (28, 30); und
e) Aufeinanderlegen von Endbereichen (24) des zumindest einen Zuschnitts der Folienbahn (8), Anlegen der oberen Formkörper (28, 30) beidseitig der Endbereiche (24) und Verbinden der sich überlappenden Endbereiche (24),
wobei
f) der zumindest eine Zuschnitt der Folienbahn (8) vor dem Verbinden seiner Endbereiche (24) um den Ringkörper (12) gespannt wird, indem in der Folienbahn (8) in Umfangsrichtung eine Zugspannung erzeugt wird, indem die oberen Formkörper (28, 30) eine zusätzliche Bewegung in der Umfangsrichtung ausführen.

2. Verfahren nach Anspruch 1, **dadurch gekennzeichnet, dass** das Verbinden der sich überlappenden Endbereiche (24) durch ein thermisches Fügeverfahren (38) durchgeführt wird.

3. Verfahren nach Anspruch 2, **dadurch gekennzeichnet, dass** eine Folienbahn (8) aus einem für einen Schweißprozess geeigneten Kunststoff benutzt wird.

4. Verfahren nach Anspruch 2 oder 3, **dadurch gekennzeichnet, dass** das Verbinden der sich überlappenden Endbereiche (24) durch Laserschweißen (38) unter Benutzung einer Lasersperrschicht (42) durchgeführt wird.

5. Verfahren nach einem der Ansprüche 2 bis 4, **dadurch gekennzeichnet, dass** das Verschweißen ohne Schweißzusatzstoff durchgeführt wird.

6. Verfahren nach einem der Ansprüche 2 bis 4, **dadurch gekennzeichnet, dass** vor dem Verschweißen ein Schweißzusatzstoff (42) zwischen die sich überlappenden Endbereiche (24) eingelegt wird.

7. Verfahren nach Anspruch 6, **dadurch gekennzeichnet, dass** als Schweißzusatzstoff eine als Lasersperrschicht dienende Folie (42) benutzt wird.

8. Verfahren nach einem der Ansprüche 1 bis 7, **dadurch gekennzeichnet, dass** das Umschlingen des Ringkörpers (12) mit der Folie mittels Zustellbewegungen von an der flachen Folienbahn (8) angreifenden Formkörpern (26, 28, 30) durchgeführt wird.

9. Verfahren nach einem der Ansprüche 2 bis 8, **dadurch gekennzeichnet, dass** beim Schweißvorgang die sich überlappenden Endbereiche (24) der Folienbahn (8) durch Zustellen von Andrückstücken (40) aneinandergedrückt werden.

## Claims

1. Method for producing a filter element (2) for filtering fluids, such as hydraulic fluids, lubricants or fuels, comprising the following steps:
a) providing at least one section of a filter mat web (14) made from one or more layers of at least one filter medium;
b) connecting the ends of the at least one section in order to form an annular body (12) and placing said annular body onto a supporting tube (16);
c) wrapping the outside of the annular body (12) placed on the supporting tube (16) with at least one length of a film web (8);
d) providing a device with a movable lower shaped body (26) and with movable upper shaped bodies (28, 30); and
e) placing end regions (24) of the at least one length of the film web (8) on top of one another, applying the upper shaped bodies (28, 30) on both sides of the end regions (24) and connecting the overlapping end regions (24),
wherein:
f) the at least one length of the film web (8) is tensioned around the annular body (12) before its end regions (24) are connected by producing tensile stress in the film web (8) in the circumferential direction, during which the upper shaped bodies (28, 30) execute an additional movement in the circumferential direction.

2. Method according to claim 1, **characterised in that** the overlapping end regions (24) are connected by means of a thermal joining method (38).

3. Method according to claim 2, **characterised in that** a film web (8) made from a plastics material suitable for a welding process is used.

4. Method according to either claim 2 or 3, **characterised in that** the overlapping end regions (24) are connected by laser welding (38) using a laser barrier layer (42).

5. Method according to any one of claims 2 to 4, **characterised in that** the welding process is carried out without additional welding material.

6. Method according to any one of claims 2 to 4, **characterised in that** an additional welding material (42) is inserted between the overlapping end regions (24) before welding.

7. Method according to claim 6, **characterised in that** a film (42) acting as a laser barrier layer is used as additional welding material.

8. Method according to any one of claims 1 to 7, **characterised in that** the film is wrapped around the annular body (12) by means of feed movements by shaped bodies (26, 28, 30) applied to the flat film web (8).

9. Method according to any one of claims 2 to 8, **characterised in that** the overlapping end regions (24) of the film web (8) are pressed against one another by feeding (40) pressing parts.

## Revendications

1. Procédé de fabrication d'un élément (2) filtrant pour la filtration de fluides, comme des fluides hydrauliques, des lubrifiants ou des carburants, comprenant les stades :
a) on prévoit au moins un tronçon d'une bande (14) de matte de filtre, en une ou en plusieurs couche d'au moins un milieu filtrant ;
b) on relie les extrémités du au moins un tronçon pour former une pièce (12) annulaire et on met celle-ci sur un tube (16) d'appui ;
c) on enroule, sur la face extérieure de la pièce (12) annulaire se trouvant sur le tube (16) d'appui, un flan d'une bande (8) de feuille ;
d) on se procure un dispositif ayant une pièce (26) inférieure de moule pouvant être déplacée et des pièces (28, 30) supérieures de moule mobiles ; et
e) on superpose des parties (24) d'extrémité du au moins un flan de la bande (8) de feuille, on applique les pièces (28, 30) supérieures de moule des deux côtés des parties (24) d'extrémité et on relie les parties (24) d'extrémité, qui se chevauchent,
dans lequel
f) on tend, autour de la pièce (12) annulaire, le au moins un flan de la bande (8) de feuille, avant la liaison de ses parties (24) d'extrémité, en produisant, dans la bande (8) de feuille, une tension de traction dans la direction du pourtour, par le fait que les pièces (28, 30) supérieures de moule exécutent un déplacement supplémentaire dans la direction du pourtour.

2. Procédé suivant la revendication 1, **caractérisé en ce que** l'on effectue la liaison des parties (24) d'extrémité, qui se chevauchent, par un procédé (38) de jonction thermique.

3. Procédé suivant la revendication 2, **caractérisé en ce que** l'on utilise une bande (8) de feuille en une matière plastique appropriée à une opération de soudure.

4. Procédé suivant la revendication 2 ou 3, **caractérisé en ce que** l'on effectue la liaison des parties (24) d'extrémité, qui se chevauchent, par soudure (38) laser, en utilisant une couche (42) d'arrêt laser.

5. Procédé suivant l'une des revendications 2 à 4, **caractérisé en ce que** l'on effectue la soudure sans matière d'apport de soudure.

6. Procédé suivant l'une des revendications 2 à 4, **caractérisé en ce qu'**avant la soudure, on insère une matière (42) d'apport de soudure entre les parties (24) d'extrémité, qui se chevauchent.

7. Procédé suivant la revendication 6, **caractérisé en ce que** l'on utilise, comme matière d'apport de soudure, une feuille (42) servant de couche d'arrêt laser.

8. Procédé suivant l'une des revendications 1 à 7, **caractérisé en ce que** l'on effectue l'enroulement de la pièce (12) annulaire par la feuille, au moyen de déplacements d'approche de pièces (26, 28, 30) de moule attaquant la bande (8) de feuille plane.

9. Procédé suivant l'une des revendications 2 à 8, **caractérisé en ce que**, lors de l'opération de soudure, on presse l'une contre l'autre les parties (24) d'extrémité se chevauchant de la bande (8) de feuille, en approchant des pièces (40) d'application d'une pression.
